# EUROPEAN PATENT SPECIFICATION

(11) **EP 4 170 328 B1**
(45) Date of publication and mention of the grant of the patent: **08.07.2026**
(21) Application number: 21828334.9
(22) Date of filing: 10.06.2021
(51) Int. Cl.: G01V 5/22, G01V 5/26, G01N 23/04, G01V 5/00

(54) **FUSION SYSTEM AND METHOD FOR RADIATION IMAGING AND RADIOACTIVE MATERIAL MONITORING**
FUSIONSSYSTEM UND VERFAHREN ZUR STRAHLUNGSBILDGEBUNG UND ÜBERWACHUNG VON RADIOAKTIVEM MATERIAL
SYSTÈME DE FUSION ET PROCÉDÉ D'IMAGERIE PAR RAYONNEMENT ET DE SURVEILLANCE DE MATÉRIAU RADIOACTIF

(30) Priority: 23.06.2020 CN 202010578035
(43) Date of publication of application: 26.04.2023
(73) Proprietor: Tsinghua University, Haidian District, Beijing 100084 (CN); Nuctech Company Limited, TongFang Building Shuangqinglu Haidian District Beijing 100084 (CN)
(72) Inventor: CHEN, Zhiqiang, Beijing 100084 (CN); ZHANG, Jinyu, Beijing 100084 (CN); TANG, Huaping, Beijing 100084 (CN); ZHAO, Kun, Beijing 100084 (CN); JIN, Xin, Beijing 100084 (CN); LI, Dongmao, Beijing 100084 (CN); ZHANG, Tong, Beijing 100084 (CN); LI, Ke, Beijing 100084 (CN); JIN, Zengxue, Beijing 100084 (CN); WANG, Kai, Beijing 100084 (CN); ZHANG, Guoqiang, Beijing 100084 (CN); ZHU, Weitao, Beijing 100084 (CN); LIN, Weizhi, Beijing 100084 (CN); DING, Hui, Beijing 100084 (CN); HAN, Xilin, Beijing 100084 (CN); ZHANG, Jing, Beijing 100084 (CN)
(74) Representative: Gunzelmann, Rainer
(86) International application number: PCT/CN2021/099356
(87) International publication number: WO 2021/259070

(56) References cited:
- EP-A1- 2 749 905
- CN-A- 101 539 556
- CN-A- 101 561 405
- CN-A- 102 834 738
- CN-A- 104 374 784
- CN-A- 111 487 262
- US-A- 5 838 759
- US-A1- 2005 105 665
- US-A1- 2007 153 974
- US-A1- 2016 123 901
- US-A1- 2019 179 050

## Description

### TECHNICAL FIELD

Embodiments of the present invention generally relate to a field of security inspection of a luggage or package object, and in particular, to a system and a method capable of integrating a radiation imaging and a radioactive substance monitoring.

### BACKGROUND

The radioactive material monitoring has been widely used in customs, borders, nuclear power stations and other places for entrance and exit detections to fight against an illegal transfer and transportation of radioactive materials and prevent a risk of radioactive material proliferation. In the existing radioactive material monitoring technology, a gamma ray or a neutron ray emitted by a radioactive material is mainly detected to identify whether a radioactive material is contained.

The X-ray imaging technology has a wide range of important applications in the field of security inspection, medical diagnosis, industrial non-destructive testing, etc. It may efficiently detect dangerous explosives, flammable and corrosive materials or other dangerous and contraband goods hidden in objects through visual images in application scenarios such as customs ports, civil aviation logistics, and railway transportation.

The radioactive material monitoring technology and the X-ray imaging technology have many overlapping portions in application scenarios. In entrance and exit detection places such as customs and borders, due to the needs of detection, it is not uncommon that radioactive material monitoring devices and X-ray imaging devices exist at the same time. However, limited by the interference of the detection principles of the two technologies, an X-ray emitted in an X-ray imaging will interfere with a radioactive material monitoring, and the two may not be performed at the same time.

In the field of luggage or package security inspection imaging, a low energy X-ray source based on a hot cathode is often used. In this kind of X-ray source, electrons are emitted by heating a filament, and an anode target is bombarded under an action of an accelerating electric field to generate an X-ray. In this traditional X-ray source, a period of heating time, usually hundreds of milliseconds, is required from heating the filament to emitting electrons to generate an X-ray. As a result, generation of an X-ray is not immediate, and it usually takes hundreds of milliseconds to several seconds to work again if an interruption occurs. Based on the characteristic that the generation of such an X-ray requires a certain delay, an X-ray source usually works continuously. A commonly used low-energy X-ray imaging device needs to continuously generate X-rays, and this inevitably causes radiation interferences to a radioactive material monitoring device, makes it impossible for the radioactive monitoring device to effectively distinguish whether radioactive information comes from a detected object or from the X-ray imaging device.

Traditionally, a radioactive material monitoring device and an X-ray imaging device are usually arranged separately, or they are arranged adjacent to each other after a shielding is added, or a limited converging is made in the accelerator light source imaging technology. An additional transitional space is required to arrange the two types of devices separately, and this will increase the number and time of the object detection and reduce the efficiency of the object detection. Arranging the two types of devices adjacent to each other after a shielding is added solves the problem, but the additional shielding structure brings additional space requirements, increases partial costs, and greatly limits the arrangement flexibility of radioactive material monitoring components. At the same time, the radioactive information of the detected object and the X-ray image information of the detected object are not dynamically integrated, and as a result the improvement of the detection efficiency of an object is limited.

In some conventional methods, the accelerator light source imaging technology is converged with the radioactive material monitoring to some extent to achieve the radiation imaging inspection and the radioactive material monitoring. However, this method is limited by the application scope of the accelerator light source and may not be used in an application such as an ordinary luggage security inspection. An accelerator X-ray source usually produces an X-ray having a high energy, often in a magnitude of megaelectron volts, is mostly used in the field of imaging of large-scale cargos and vehicles, and is often seen at circulation gates of large-scale cargos and vehicles in customs, borders, etc. Due to the high energy and strong penetrating power of the X-ray, a high safety protection is required during a normal operation. Moreover, the volume of the device is large, and the overall floor area is large. In the field of luggage or package imaging inspection, considering that inspection objects are luggage and packages, an X-ray energy is required to be in a magnitude of kiloelectron volts. At the same time, considering that the application scenarios are customs, airports, subways, large-scale events, and other sensitive places for a luggage or package object security inspection, the security protection requirements for the overall device are high, the device needs to occupy a small area and is convenient for deployment. That is, an accelerator light source is not applicable for a radiation imaging in the field of luggage and package imaging inspection.

US 2005/105665 A1 discloses a method for searching for sources of nuclear material by observing particular signatures (e.g., gamma rays, neutrons, electrons, alpha particles), and simultaneously inspecting containers with penetrating radiation and searching for fissile or radioactive material within the containers. The backscatter detector and two X-ray systems are provided on both sides of the container, and the X-rays being blocked during the rotation process by rotation of chopper wheel itself, so as to realize the pulse emission of X-rays.

US 2019/179050 A1 discloses a system using inspection radiation through vehicles for inspecting cargo of the vehicle to detect hidden objects. Specifically, the system includes a radiation source, a plurality of detectors, and an analyzer for detecting the presence of radioactive gamma emitting material within the load.

### SUMMARY

The present disclosure is provided in order to overcome at least one of the above and other problems and defects in the related art.

According to the present invention a converged system and a method for performing a radiation imaging and a radioactive material monitoring on a luggage or package object are set forth in the independent claims. Embodiments are provided in the dependent claims. In an aspect, there is provided a converged system according to claim 1.

According to the invention, the radiation imaging subsystem includes: a radiation source configured to generate a radiation beam in a pulse mode for irradiating the luggage or package object; and a radiation imaging detector configured to detect a ray emitted or generated by the luggage or package object under an irradiation of the radiation beam, so as to generate data for forming an image of the luggage or package object.

According to the invention, the radiation source is a low-energy X-ray source capable of a controllable pulse emission, such as a fast-pulse low-energy X-ray source capable of a fast pulse emission switching between tens of microseconds and tens of milliseconds. The ray source includes an X-ray source generating a cathode electron by pulsing, such as an X-ray source based on a carbon nanotube cathode and a hot cathode X-ray source having a grid control gate. The ray source may also include a pulse X-ray source of a single target and a pulse distributed X-ray source of multiple targets.

In some embodiments, the radioactive material monitoring subsystem includes a radioactivity monitoring detector configured to operate in a pulse mode to monitor a radioactive ray emitted by the luggage or package object.

In some embodiments, the radioactivity monitoring detector includes at least one of a gamma ray detector and a neutron detector.

In some embodiments, the synchronization control subsystem is configured to control the radiation imaging subsystem and the radioactive material monitoring subsystem to operate alternately in real time through a variable and adjustable pulse control signal.

In some embodiments, the radiation imaging subsystem is configured to operate according to the first pulse control signal to perform the radiation imaging on the luggage or package object, the radioactive material monitoring subsystem is configured to operate according the second pulse control signal to monitor whether the luggage or package object contains a radioactive material, and the first pulse control signal and the second pulse control signal include rectangular waves.

In some embodiments, the first pulse control signal includes a plurality of first pulses, the second pulse control signal includes second pulses, the radioactive material monitoring subsystem being configured to operate during the second pulses to monitor a radioactive ray emitted by the luggage or package object, and each of some or all of the second pulses is between two adjacent first pulses in time, and a spacing between adjacent first pulses is greater than or equal to a pulse width of the second pulses.

In some embodiments, the converged system further includes: a transmission subsystem configured to transport the luggage or package object to pass through a detection region, and output a transmission signal indicating times when the luggage or package object enters and leaves the detection region and a transporting speed of the luggage or package object to at least the synchronization control subsystem, wherein the synchronization control subsystem is further configured to control operations of the radiation imaging subsystem and the radioactive material monitoring subsystem based on the transmission signal. For example, in the radiation imaging subsystem and the radioactive material monitoring subsystem described above, a fast switching within a short period between tens of microseconds to tens of milliseconds may be achieved through a fast pulse, so that X-ray perspective imaging information of the detected object and radioactive ray intensity information of the detected object may be acquired quickly and alternately during an uniform or continuous transporting process (without pausing or waiting) of the transmission subsystem.

In some embodiments, the converged system further includes: an information converging subsystem configured to be in communication with the radioactive material monitoring subsystem and the radiation imaging subsystem, so as to converge a radioactivity information of the luggage or package object obtained by the radioactive material monitoring subsystem into the image of the luggage or package object obtained by the radiation imaging subsystem.

According to another aspect, there is provided a method according to claim 9.

In some embodiments, the operating a radiation imaging subsystem in a pulse mode to perform a radiation imaging on the luggage or package object includes: generating a radiation beam in a pulse mode to irradiate the luggage or package object by a low-energy X-ray source capable of a controllable pulse emission; and detecting a ray emitted or generated by the luggage or package object under an irradiation of the radiation beam to generate data for forming an image of the luggage or package object by a radiation imaging detector.

In some embodiments, the operating a radioactive material monitoring subsystem in the pulse mode to monitor whether the luggage or package object contains a radioactive material includes: operating a radioactivity monitoring detector in a pulse mode to monitor a radioactive ray emitted by the luggage or package object.

In some embodiments, at least one of a gamma ray and a neutron ray emitted by the luggage or package object is monitored by the radioactivity monitoring detector.

In some embodiments, the radiation imaging subsystem and the radioactive material monitoring subsystem are controlled in real time to operate alternately by the synchronization control subsystem through a variable and adjustable pulse control signal.

In some embodiments, the radiation imaging subsystem is controlled to operate according to the first pulse control signal to perform the radiation imaging on the luggage or package object, the radioactive material monitoring subsystem is controlled to operate according the second pulse control signal to monitor whether the luggage or package object contains a radioactive material, and the first pulse control signal and the second pulse control signal include rectangular waves.

In some embodiments, the first pulse control signal includes a plurality of first pulses, the second pulse control signal includes second pulses, the radioactive material monitoring subsystem operating during the second pulses to monitor a radioactive ray emitted by the luggage or package object, and each of some or all of the second pulses is between two adjacent first pulses in time, and a spacing between adjacent first pulses is greater than or equal to a pulse width of the second pulses.

In some embodiments, the method further includes: transporting the luggage or package object to pass through a detection region, and outputting a transmission signal indicating times when the luggage or package object enters and leaves the detection region and a transporting speed of the luggage or package object to at least the synchronization control subsystem by a transmission subsystem, and controlling operations of the radiation imaging subsystem and the radioactive material monitoring subsystem by the synchronization control subsystem based on the transmission signal.

In some embodiments, the method further includes: converging a radioactivity information of the luggage or package object obtained by the radioactive material monitoring subsystem into the image of the luggage or package object obtained by the radiation imaging subsystem.

Other objectives and advantages of the present disclosure will be apparent from the following detailed description of the present disclosure with reference to the accompanying drawings, and may help a comprehensive understanding of the present disclosure.

### BRIEF DESCRIPTION OF THE DRAWINGS

The features and advantages of the present disclosure may be more clearly understood by referring to the accompanying drawings, and the accompanying drawings are schematic and should not be construed as limiting the present disclosure in any way, in which:
FIG. 1 is a block diagram showing an arrangement of a converged system for performing a radiation imaging and a radioactive material monitoring according to exemplary embodiments of the present disclosure;
FIG. 2 is a side view showing an arrangement of a converged system for performing a radiation imaging and a radioactive material monitoring according to an exemplary embodiment of the present disclosure;
FIG. 3 is a side view showing an arrangement of a converged system for performing a radiation imaging and a radioactive material monitoring according to another exemplary embodiment of the present disclosure;
FIG. 4 is a side view showing an arrangement of a converged system for performing a radiation imaging and a radioactive material monitoring according to yet another exemplary embodiment of the present disclosure;
FIG. 5 is a sequence diagram showing a working mode of a converged system for performing a radiation imaging and a radioactive material monitoring according to an exemplary embodiment of the present disclosure;
FIG. 6 is a sequence diagram showing a working mode of a converged system for performing a radiation imaging and a radioactive material monitoring according to another exemplary embodiment of the present disclosure;
FIG. 7 is a sequence diagram showing a working mode of a converged system for performing a radiation imaging and a radioactive material monitoring according to yet another exemplary embodiment of the present disclosure;
FIG. 8 is a block diagram showing an arrangement of a converged system for performing a radiation imaging and a radioactive material monitoring according to an exemplary embodiment of the present disclosure; and
FIG. 9 is a flowchart showing a method for performing a radiation imaging and a radioactive material monitoring according to an example of the present disclosure.

### DETAILED DESCRIPTION OF EMBODIMENTS

The technical solutions in the embodiments of the present disclosure will be clearly and completely described below in combination with the accompanying drawings in the embodiments of the present disclosure. Obviously, the described embodiments are only a portion of the embodiments of the present disclosure, not all of the embodiments.

Additionally, in the following detailed description, for the purpose of explanation, numerous specific details are set forth in order to provide a thorough understanding of the embodiments of the present disclosure. It may be obvious, however, that one or more embodiments may be implemented without these specific details. In other instances, commonly known structures and devices are shown in diagram to simplify the drawings.

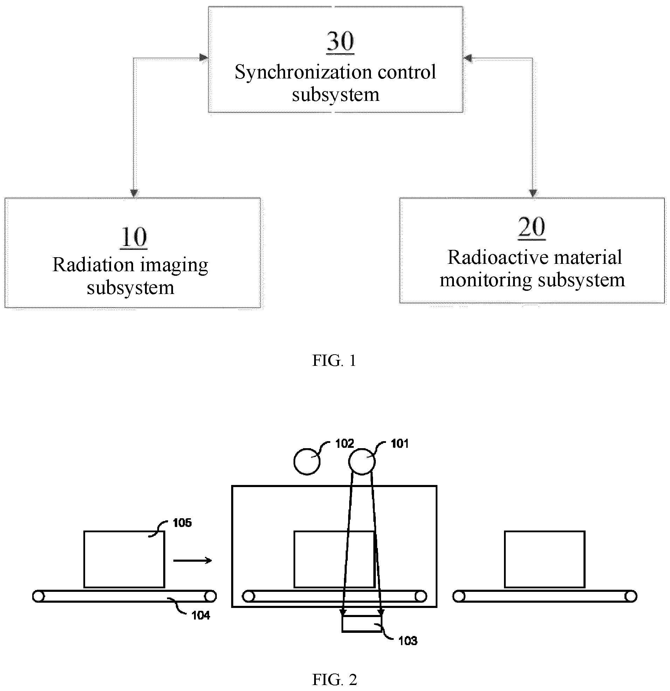

FIG. 1 schematically shows an arrangement of a converged system for performing a radiation imaging and a radioactive material monitoring according to an exemplary embodiment of the present disclosure. The converged system is deployed in sites such as customs, airports, subways, stations, and public places, so as to perform a security inspection on a luggage or package object carried by a person or transported through an express delivery. The converged system includes a radiation imaging subsystem 10, a radioactive material monitoring subsystem 20 and a synchronization control subsystem 30. The radiation imaging subsystem 10 may operate in a pulse mode or in a discontinuous mode (e.g., be activated or operate intermittently) to perform a radiation imaging, such as a low energy radiation imaging, on the luggage or package object, and it may include, for example, an X-ray imaging system. It will be understood that "low energy" or "low energy radiation imaging" described herein is mentioned relative to a high energy radiation source such as an accelerator source, and is applicable for a radiation imaging, such as a radiation imaging having an X-ray energy in a magnitude of kiloelectron volts (kev), of a luggage or package object in the above locations.

The radioactive material monitoring subsystem 20 may also operate in a pulse mode or in a discontinuous mode to monitor whether the luggage or package object contains a radioactive material. The synchronization control subsystem 30 is in communication with the radiation imaging subsystem 10 and the radioactive material monitoring subsystem 20, and controls the radiation imaging subsystem and the radioactive material monitoring subsystem to operate alternately, so as to perform a radiation imaging and a radioactive material monitoring on a same luggage or package object, thereby improving the detection efficiency. In this way, a radiation imaging operation will not affect or interfere with a radioactive material monitoring operation, and the radiation imaging subsystem and the radioactive material monitoring subsystem may be arranged adjacent to each other or arranged in a compact manner without an additional shielding structure being arranged therebetween, thereby reducing the costs and improving the flexibility in arrangement of system components.

In the embodiments of the present disclosure, the synchronization control subsystem is used to coordinate (e.g., in time sequence) operations of both the radiation imaging subsystem and the radioactive material monitoring subsystem, and ensure that the operations of the two do not interfere with each other. Exemplarily, the synchronization control subsystem may be implemented by various suitable hardware/software, including various controllers, control modules or application programs. For example, they may be converged in an inspection operating stage, converged in a control mechanism of the radiation imaging subsystem and/or the radioactive material monitoring subsystem, or arranged separately. The present disclosure does not specifically limit thereto.

According to an exemplary embodiment of the present disclosure, the radiation imaging subsystem at least includes a radiation source and a radiation imaging detector. The radiation source generates a radiation beam in a pulse mode or in an intermittent mode for irradiating the luggage or package object, and the radiation imaging detector detects a ray emitted or generated (e.g., scattered, reflected or transmitted) by the luggage or package object under an irradiation of the radiation beam to generate data, such as an electrical signal, for forming an image of the luggage or package object. The radiation source includes a low-energy X-ray source capable of a controllable pulse emission, especially a fast-pulse low-energy X-ray source capable of a fast pulse emission switching between tens of microseconds and tens of milliseconds. The ray source includes an X-ray source generating a cathode electron by pulsing. As an example, the radiation source may be an X-ray source based on a carbon nanotube cathode or a hot cathode X-ray source having a grid control gate or any other suitable ray source operable in a pulse mode. For example, an X-ray source based on a carbon nanotube cathode is taken as an example. Under an action of a high voltage, a pulsed X-ray may be obtained by controlling the carbon nanotube cathode to emit electrons in a pulsed manner or in an intermittent manner to bombard an anode target. Thanks to the field electron emission characteristics of the carbon nanotube cathode, after a suitable field emission electric field is applied, electrons may be emitted instantaneously, for example, in less than a microsecond, and after the field emission electric field is removed, the emission of electrons may be stopped immediately. Such characteristic of instantaneous emission and stop of electrons enables an X-ray source to generate or stop an X-ray orderly according to the control pulse, for example, under an action of a control pulse of a control assembly.

In the embodiments of the present disclosure, the radioactive material monitoring subsystem at least includes a radioactivity monitoring detector operable in a pulse mode to monitor a radioactive ray emitted from the luggage or package object itself or a radioactive material contained therein. For example, the radioactivity monitoring detector may include a gamma ray detector, a neutron detector, or both of them.

FIG. 2 to FIG. 4 schematically show an arrangement of components of a security inspection system with a radiation imaging and a radioactive material monitoring being converged at the same time according to an exemplary embodiment of the present disclosure, wherein a radiation source capable of generating an X-ray in a pulse mode is taken as an example for illustration. In the embodiment of FIG. 2, the security inspection system includes an X-ray source 101, a radioactive material monitoring component 102, an X-ray imaging detector 103 and a conveying device 104. The conveying device 104 is, for example, a conveyor belt used to convey a luggage or package object 105 to pass through a detection region of the security inspection system, as indicated by the arrow in the figure. In the process that the luggage or package object 105 passes through the detection region, the radioactive material monitoring component 102 detects radioactivity information of the luggage or package object 105, the X-ray source 101 emits an X-ray to irradiate or scan the luggage or package object, the X-ray imaging detector 103 detects a ray emitted or generated by the luggage or package object 105 under an irradiation of the X-ray, wherein the ray is for example a radiation reflected, scattered or transmitted by the luggage or package object 105, so that X-ray imaging data may be obtained. Exemplarily, the X-ray imaging detector 103 is arranged opposite to the X-ray source 101 to ensure that an effective X-ray scanning range may completely cover the detection region and a ray emitted (for example, reflected, scattered or transmitted) by the luggage or package object may be received.

Through a regulation of the synchronization control subsystem, in the process that the object passes through the detection region, in a pulse working mode, the radioactive material monitoring and the X-ray imaging of the luggage or package object are achieved. Under the regulation of the synchronization control subsystem, respective operations of the radioactive material monitoring subsystem and the X-ray imaging subsystem are performed alternately without an interference to each other, so that there is no restriction on an arrangement of the radioactive material monitoring component and the X-ray imaging component. The radioactive material monitoring component is, for example, a radioactivity monitoring detector, and may be arranged adjacent to the X-ray imaging component (such as the X-ray source 101) without isolation or shielding. Alternatively, they may also be arranged in a same cross section.

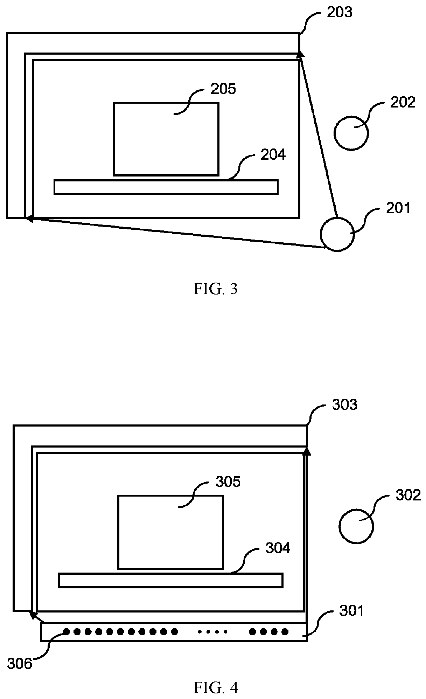

FIG. 3 shows an arrangement of components of a security inspection system with a radiation imaging and a radioactive material monitoring being converged at the same time according to another exemplary embodiment of the present disclosure. A single-target point X-ray source 201 is used to emit and scan an X-ray in a pulse mode in a fixed angle or in an angular range to irradiate a luggage or package object 205 conveyed by a conveying device 204 to pass through the inspection region. An X-ray imaging detector 203 is arranged substantially opposite to the X-ray source 201 along an emission direction of an X-ray, and for example, includes an detector array having an L-shaped cross section used to receive a ray from the luggage or package object 205 and produce imaging data for forming a radiation image of the luggage or package object 205. A radioactive material monitoring component 202 (e.g., a radioactivity monitoring detector) may be arranged adjacent to the X-ray source 201, for example, in a same cross section, and start or operate in a pulse mode, for example, before or after the X-ray source 201 emits an X-ray, so as to detect radioactivity information of the luggage or package object 205.

FIG. 4 shows an arrangement of components of a security inspection system for converging a radiation imaging and a radioactive material monitoring at the same time according to yet another exemplary embodiment of the present disclosure, wherein a multi-point X-ray source 301 is used. The multi-point X-ray source 301 is a distributed X-ray source having multiple target points 306, and may generate X-rays from multiple locations to irradiate or scan a luggage or package object 305 conveyed by a conveying device 304 to pass through the detection region. The time sequence of generating X-rays at each target point may be flexibly controlled. The arrangement of the target points of the X-ray source may be in a straight line segment as shown in FIG. 4, or a broken line segment, an arc segment, or a combination thereof. The arrangement of the target points of the X-ray source is arranged in a direction forming a surrounding (or a surrounding in a certain angular range) of the detected object. An X-ray imaging detector 303 is arranged substantially opposite to the X-ray source 301 along an emission direction of an X-ray, and for example, includes a detector array having an L-shaped cross section used to receive a ray from the luggage or package object 305 and produce imaging data for forming a radiation image of the luggage or package object 305. A radioactive material monitoring component 202 may be arranged adjacent to the X-ray source 301, for example, in a same cross section, and start or operate in a pulse mode, for example, before or after the X-ray source 301 emits an X-ray, so as to detect radioactivity information of the luggage or package object 305. A multi-point X-ray source structure is used, so that a ray imaging subsystem may obtain a multi-view image or a three-dimensional image of a luggage or package object.

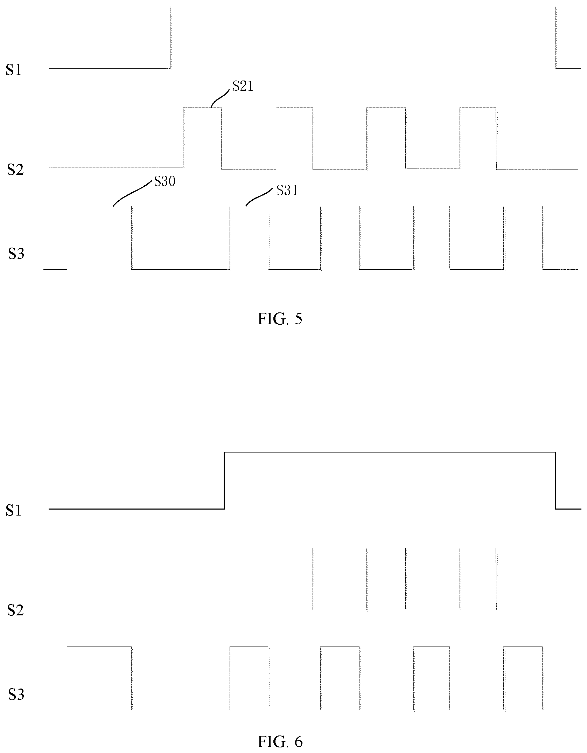

The synchronization control subsystem serves as a bridge for coordination and cooperation of the radioactive material monitoring subsystem and the radiation imaging subsystem, and dynamically deploys the work of the two. For example, the synchronization control subsystem may control the radiation imaging subsystem and the radioactive substance monitoring subsystem in real time through a variable and adjustable pulse to operate alternately. FIG. 5 to FIG. 7 schematically show a working mode of a converged system for performing a radiation imaging and a radioactive material monitoring according to an exemplary embodiment of the present disclosure. As shown in FIG. 5 to FIG. 7, the converged system or the synchronization subsystem may receive a trigger signal S1, and the trigger signal S1 may indicate the times when a luggage or package object enters and leave the detection region, so as to activate the radioactive material monitoring subsystem and the radiation imaging subsystem to work orderly. The trigger signal may be provided by a signal input and output control assembly, for example, a sensor or a trigger mechanism may be arranged along a path of conveying the luggage or package object to sense the times when the luggage or package object enters and leaves the detection region. As an alternative or a supplement, object motion information is given according to a transporting operation of the conveying device to generate a trigger signal.

In some examples, the converged system further includes a transmission subsystem used to transport a luggage or package object to pass through the detection region, and including, for example, the above conveying device. The transmission subsystem may output a transmission signal indicating times when the luggage or package object enters and leaves the detection region and/or a transporting speed of the luggage or package object to the synchronization control subsystem, so that the synchronization control subsystem may control the radiation imaging subsystem and the radioactive material monitoring subsystem to operate based on the transmission signal. The radiation imaging subsystem and the radioactivity monitoring subsystem both work in a pulse mode under a deployment of the synchronization control subsystem. A working pulse has clear time information, and radioactivity information corresponding to a certain position or portion of the detected object may be clearly obtained in combination with the motion information of the detected object provided by the transmission subsystem.

Exemplarily, the transmission subsystem may include a conveying device (such as a conveyor belt or a belt conveying assembly), a transmission sensor assembly, and a transmission information output assembly. The conveying device includes a motor, a belt, a linkage component, etc., and carries a detected object to pass through a detection region. The transmission sensor assembly may include a speed sensor and a photoelectric gate sensor, etc., to monitor the working state of the transmission subsystem and provide signals of an object entering and leaving the detection region. The transmission information output assembly outputs the signals of an object entering and leaving the detection region and a moving speed of the detected object to the synchronization control subsystem.

For example, a low level of an S1 signal in the figure indicates that the luggage or package object has not entered or have not been detected to enter the detection region, and a rising edge indicates that the luggage or package object has begun to enter or will be detected to enter the detection region. A high level indicates that the luggage or package object has been transported to pass through the detection region, and a falling edge indicates that the luggage or package object has left the detection region or has been detected to leave the detection region.

As shown in FIG. 5 to FIG. 7, the radiation imaging subsystem is configured to operate according to the first pulse control signal S2 to perform a radiation imaging on the luggage or package object, while the radioactive material monitoring subsystem is configured to operate according to the second pulse control signal S3 to monitor whether the luggage or package object contains a radioactive material. Exemplarily, the first pulse control signal or the second pulse control signal may include a rectangular wave (square wave). Each of the first pulse control signal and the second pulse control signal includes a plurality of pulses, and each pulse indicates that the corresponding radiation imaging subsystem and the radioactive material monitoring subsystem operate to perform a corresponding detection operation. For example, the first pulse control signal S2 includes a plurality of first pulses S21 and indicates that the radiation imaging subsystem (e.g., the radiation source and the detector thereof) operates in this period to perform a radiation imaging operation on the luggage or package object that is passing through the detection region. The second pulse control signal S3 includes a second pulse S31, and the radioactive material monitoring subsystem operates in a period of the second pulse S31 to monitor a radioactive ray emitted by the luggage or package object. It may be seen that the first pulse S21 and the second pulse S31 are alternate in time sequence, and this ensures that the radiation imaging subsystem and the radioactive material monitoring subsystem work alternately according to the given pulse signals and according to the deployment of the synchronization control system without interfering with each other.

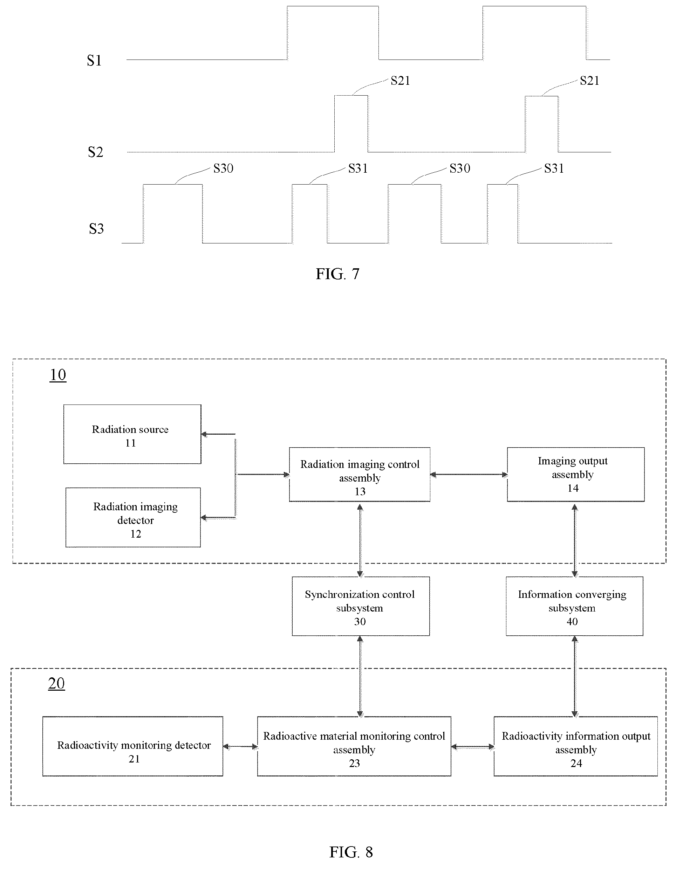

In the embodiment of FIG. 5, the second pulse S31 appears after the first pulse S21, and this means that after the radiation imaging operation is performed, a radioactive ray emitted by the luggage or package object is detected by the radioactive material monitoring subsystem. In the embodiment of FIG. 6, the second pulse appears before the first pulse, and this means that the radioactive material monitoring is performed first, and then the radiation imaging operation is performed, thereby further avoiding an interference or an influence of the radiation imaging with or on the radioactive material monitoring. In addition, in a preparation stage, i.e., before the rising edge of the S1 signal, the radioactive material monitoring subsystem may measure environmental background radioactive data (in a period of the pulse S30). In the embodiment of FIG. 7, the radioactive material monitoring subsystem may measure the environmental background radioactive data before each detection of a radioactive ray of a luggage or package object. After a detected object enters the detection region and the trigger signal S1 appears, the radiation imaging subsystem and the radioactive material monitoring subsystem work alternately according to the given pulse signals and according to the deployment of the synchronization control subsystem.

A pulse width and a pulse frequency of each pulse may be adjusted according to requirements. Exemplarily, as shown in FIG. 5 to FIG. 7, each of some or all of the second pulses is located between two adjacent first pulses in time, and a distance between adjacent first pulses is greater than or equal to a pulse width of the second pulse.

According to some embodiments, the converged system further includes an information converging subsystem configured to be in communication with the radioactive material monitoring subsystem and the radiation imaging subsystem to converge a radioactivity information of the luggage or package object obtained by the radioactive material monitoring subsystem into the image of the luggage or package object obtained by the radiation imaging subsystem, thereby accurately and more intuitively determining a position of a radioactive material on the luggage or package object may, or acquiring a converged image of a distribution of the radioactive material contained in the luggage or package object. It may be understood that, similar to the synchronization control subsystem, the information converging subsystem may also be implemented by various suitable hardware/software. The information converging subsystem and the synchronization control subsystem may also be arranged separately, or they may be located in a same control system or controller, for example, they may be different modules in a same control system or controller.

In some examples, the information converging subsystem may include an image converging assembly and an alert information assembly. The image converging assembly performs a converging processing on the image or radiation data of the detected object obtained by the radiation imaging subsystem and the radioactivity information data of the detected object output by the radioactivity information output assembly in an image domain to obtain image information of the detected object with radioactivity information. The alarm information assembly may determine whether the detected object contains a dangerous and prohibited article according to the obtained image or radiation data of the detected object, and at the same time judge whether the detected object contains a radioactive material according to the radioactivity information of the detected object output by the radioactivity information output assembly. An appropriate alarm display and action are made according to the above judgment information.

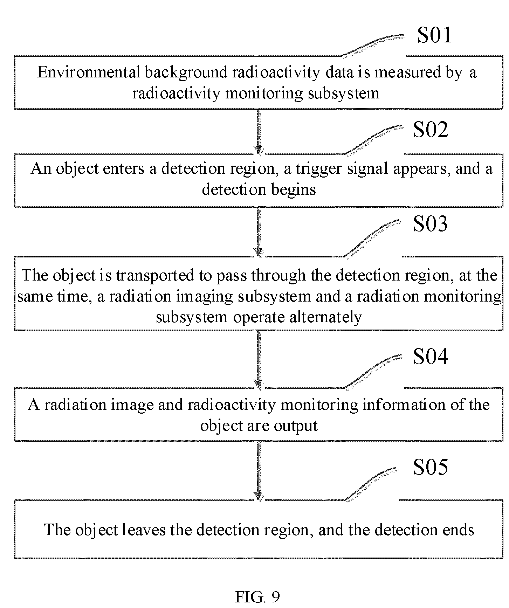

FIG. 8 shows an arrangement of a security inspection system with a radiation imaging and a radioactive material monitoring being converged according to a specific example of the present disclosure. As shown in the figure, the security inspection system includes a radiation imaging subsystem 10, a radioactive material monitoring subsystem 20 as well as a synchronization control subsystem 30 and an information converging subsystem 40 which are in communication with both the radiation imaging subsystem 10 and the radioactive material monitoring subsystem 20. The radiation imaging subsystem 10 includes a radiation source 11, a radiation imaging detector 12, a radiation imaging control assembly 13 and an imaging output assembly 14. The radiation imaging control assembly 13 controls the radiation source 11 and the radiation imaging detector 12 to operate in a pulse mode to acquire radiation imaging data of a luggage or package object. The imaging output assembly 14 may output a radiation imaging data signal of the luggage or package object, such as a radiation image. The radioactive material monitoring subsystem 20 includes a radioactivity monitoring detector 21, a radioactive material monitoring control assembly 23 and a radioactivity information output assembly 24. The synchronization control subsystem 30 may respectively control the radiation imaging subsystem 10 and the radioactive material monitoring subsystem 20 to operate in a pulse mode through the radiation imaging control assembly 13 and the radioactive material monitoring control assembly 23, for example, by providing pulse signals to the radiation imaging control assembly 13 and the radioactive material monitoring control assembly 23. The information converging subsystem 40 acquires output information of the imaging output assembly 14 and the radioactivity information output assembly 24, and converges the radioactivity information of the luggage or package object obtained by the radioactive material monitoring subsystem in the radiation image of the luggage or package object obtained by the radiation imaging subsystem.

The embodiments of the present disclosure further relate to a method for performing a radiation imaging and a radioactive material monitoring using the above converged system. The method includes the following steps:
a radiation imaging subsystem is operated in a pulse mode to perform a radiation imaging on a luggage or package object; and
a radioactive material monitoring subsystem is operated in a pulse mode to monitor whether the luggage or package object contains a radioactive material; wherein the radiation imaging subsystem and the radioactive material monitoring subsystem are controlled to operate alternately by a synchronization control subsystem.

When a radiation imaging is performed on the luggage or package object, a radiation beam may be generated by a radiation source (e.g., a low-energy X-ray source capable of a controllable pulse emission) in a pulse mode to irradiate the luggage or package object, and at the same time, a ray emitted or generated by the luggage or package object under an irradiation of the radiation beam is detected by a radiation imaging detector to generate data for forming an image of the luggage or package object.

When it is monitored whether the luggage or package object contains a radioactive material, a radioactivity monitoring detector may be operated in the pulse mode to monitor a radioactive ray emitted by the luggage or package object, such as a gamma ray or a neutron ray.

In the operations, the radiation imaging subsystem and the radioactive material monitoring subsystem are controlled in real time to operate alternately by the synchronization control subsystem through a variable and adjustable pulse control signal. Specifically, the radiation imaging subsystem is controlled to operate according to a first pulse control signal to perform the radiation imaging on the luggage or package object, the radioactive material monitoring subsystem is controlled to operate according a second pulse control signal to monitor whether the luggage or package object contains a radioactive material, and the first pulse control signal or the second pulse control signal includes, for example, a rectangular wave. In some examples, the first pulse control signal includes a plurality of first pulses, and the radiation imaging subsystem operates in a period of each first pulse. The second pulse control signal includes one or more second pulses staggered from the first pulses in time sequence, and the radioactive material monitoring subsystem operates in a period of each second pulse to monitor a radioactive ray emitted by the luggage or package object. As an example, each of some or all of the second pulses is between two adjacent first pulses in time, and a spacing between adjacent first pulses is greater than or equal to a pulse width of the second pulses.

In this method, by a transmission subsystem, the luggage or package object may also be transported to pass through a detection region, and a transmission signal indicating times when the luggage or package object enters and leaves the detection region and a transporting speed of the luggage or package object may be output to at least the synchronization control subsystem, and operations of the radiation imaging subsystem and the radioactive material monitoring subsystem may be controlled by the synchronization control subsystem based on the transmission signal.

In some embodiments, the method further includes: converging a radioactivity information of the luggage or package object obtained by the radioactive material monitoring subsystem into the image of the luggage or package object obtained by the radiation imaging subsystem.

FIG. 9 is a flowchart showing a method for converging a radiation imaging and a radioactive material monitoring according to a specific example of the present disclosure. As shown in the figure, the method includes the following steps:
S01: environmental background radioactivity data is measured by the radioactivity monitoring subsystem;
S02: the luggage or package object enters the detection region, a trigger signal appears and the detection begins;
S03: the luggage or package object is transported to pass through the detection region, at the same time, the radiation imaging subsystem and the radiation monitoring subsystem operate alternately;
S04: a radiation image and radioactivity monitoring information of the luggage or package object are output; and
S05: the luggage or package object leaves the detection region, and the detection ends.

In the embodiments of the present disclosure, by using a radioactive material monitoring subsystem and a radiation imaging subsystem operable in a pulse mode under a regulation of a synchronization control subsystem, a cooperative work of meeting an imaging and a radioactive material monitoring is achieved, the device occupation space is saved, the costs caused by an additional shielding are reduced, the number of an object circulation and transportation is reduced, the number of an object detection is reduced, the time of an object detection is reduced, and the speed of an object detection is increased. At the same time, an converging of a radiation image and radioactivity monitoring data of a detected object is achieved, so that image information and radioactivity information may be displayed more intuitively. This may intuitively guide a further detection of a suspicious object, and may significantly improve the detection efficiency of objects.

In the above description, illustrative embodiments have been described with reference to actions and symbolic representations (e.g., in the form of a flowchart) of operations. The operations may be implemented to be program modules or functional processes. The program modules or functional processes include systems, programs, programming, objects, components, data structures, etc., implement specific tasks or implement specific abstract data type, and may be executable using existing hardware. Such existing hardware may include one or more central processing units (CPUs), digital signal processors (DSPs), application specific integrated circuits, field programmable gate arrays (FPGAs), and the like.

In the present text, unless specifically stated otherwise, or as apparent from the discussion, terms such as "process", "determine", "acquire", "obtain", "judge" and "control" refer to that operations or steps may be represented as data of physical electron quantities in a register and a memory of a computer system, and may be represented as actions and processes of a computer system or a similar electronic computing device converting them to be similarly represented as other data of physical quantities in a register or a memory of a computer system or another such device for information storage, transmission or display.

Illustrative embodiments have been described above with reference to actions and symbolic representations (e.g., in the form of a flowchart) of operations of steps. The operations or steps may be implemented to be program modules or functional processes. The program modules or functional processes include systems, programs, programming, objects, components, data structures, etc., implement specific tasks or implement specific abstract data type, and may be executable using existing hardware.

Those skilled in the art may understand that the present disclosure includes devices for performing one or more functions of methods, steps, operations or modules described in the present disclosure. These devices may be specially designed and manufactured for required purposes, or they may include known devices in general purpose computers. These devices have computer programs stored therein. These computer programs are selectively activated or reconfigured. Such computer programs may be stored in a device (e.g., computer) readable medium or stored in a medium of any type applicable for storing electronic instructions and respectively coupled to a bus. The computer readable medium includes but not limited to a disk of any type (including a floppy disk, a hard disk, an optical disk, a CD-ROM, and a magneto-optical disk), ROM (Read-Only Memory), RAM (Random Access Memory), EPROM (Erasable Programmable Read-Only Memory), EEPROM (Electrically Erasable Programmable Read-Only Memory), a flash memory, a magnetic card or an optical card. That is, a readable medium includes any medium storing or transmitting information in a device (e.g., a computer) readable manner.

The embodiments of the present disclosure have been shown and described, but it will be understood by those skilled in the art that modifications may be made to these embodiments within the scope defined by the appended claims.

## Claims

1. A converged system for performing a radiation imaging and a radioactive material monitoring on a luggage or package object (105, 205, 305), comprising:
a radiation imaging subsystem (10) configured to operate in a pulse mode to perform a radiation imaging on the luggage or package object;
a radioactive material monitoring subsystem (20) configured to operate in a pulse mode to monitor whether the luggage or package object contains a radioactive material; and
a synchronization control subsystem (30) being in communication with both the radiation imaging subsystem and the radioactive material monitoring subsystem;
wherein the radiation imaging subsystem comprises:
a radiation source (11) configured to generate a radiation beam in a pulse mode for irradiating the luggage or package object; and
a radiation imaging detector (12) configured to detect a ray scattered, reflected or transmitted by the luggage or package object under an irradiation of the radiation beam, so as to generate data for forming an image of the luggage or package object,
wherein the radiation source is a low-energy X-ray source capable of a controllable pulse emission, and the low-energy X-ray source is configured to perform a radiation imaging with an X-ray energy in a magnitude of kiloelectron volts on the luggage or package object, **characterized in that** the synchronization control subsystem is configured to control the radiation imaging subsystem (10) to operate according to a first pulse control signal (S2) and control the radioactive material monitoring subsystem (20) to operate according to a second pulse control signal (S3) so that the radiation imaging subsystem and the radioactive material monitoring subsystem operate alternately.

2. The converged system according to claim 1, wherein the radioactive material monitoring subsystem comprises a radioactivity monitoring detector (21) configured to operate in a pulse mode to monitor a radioactive ray emitted by the luggage or package object.

3. The converged system according to claim 2, wherein the radioactivity monitoring detector comprises at least one of a gamma ray detector and a neutron detector.

4. The converged system according to any one of claims 1 and 3, wherein the synchronization control subsystem is configured to control the radiation imaging subsystem and the radioactive material monitoring subsystem to operate alternately in real time through a variable and adjustable pulse control signal.

5. The converged system according to any one of claims 1 and 3, wherein,
the radiation imaging subsystem is configured to operate according to the first pulse control signal (S2) to perform the radiation imaging on the luggage or package object,
the radioactive material monitoring subsystem is configured to operate according the second pulse control signal (S3) to monitor whether the luggage or package object contains a radioactive material, and
the first pulse control signal and the second pulse control signal comprise rectangular waves.

6. The converged system according to claim 5, wherein,
the first pulse control signal comprises a plurality of first pulses (S21),
the second pulse control signal comprises second pulses (S31), the radioactive material monitoring subsystem being configured to operate during the second pulses to monitor a radioactive ray emitted by the luggage or package object, and
each of some or all of the second pulses is between two adjacent first pulses in time, and a spacing between adjacent first pulses is greater than or equal to a pulse width of the second pulses.

7. The converged system according to any one of claims 1, 3 and 6, further comprising:
a transmission subsystem configured to transport the luggage or package object to pass through a detection region, and output a transmission signal indicating times when the luggage or package object enters and leaves the detection region and a transporting speed of the luggage or package object to at least the synchronization control subsystem,
wherein the synchronization control subsystem is further configured to control operations of the radiation imaging subsystem and the radioactive material monitoring subsystem based on the transmission signal.

8. The converged system according to any one of claims 1, 3 and 6, further comprising:
an information converging subsystem (40) configured to be in communication with the radioactive material monitoring subsystem and the radiation imaging subsystem, so as to converge a radioactivity information of the luggage or package object obtained by the radioactive material monitoring subsystem into the image of the luggage or package object obtained by the radiation imaging subsystem.

9. A method for performing a radiation imaging and a radioactive material monitoring on a luggage or package object, comprising:
operating a radiation imaging subsystem in a pulse mode to perform a radiation imaging on the luggage or package object;
operating a radioactive material monitoring subsystem in a pulse mode to monitor whether the luggage or package object contains a radioactive material;
wherein the operating a radiation imaging subsystem in a pulse mode to perform a radiation imaging on the luggage or package object comprises:
generating a radiation beam in a pulse mode to irradiate the luggage or package object by a low-energy X-ray source being capable of a controllable pulse emission and having an X-ray energy in a magnitude of kiloelectron volts; and
detecting a ray scattered, reflected or transmitted by the luggage or package object under an irradiation of the radiation beam to generate data for forming an image of the luggage or package object by a radiation imaging detector, **characterized in that** the method further comprises controlling the radiation imaging subsystem to operate according to a first pulse control signal and controlling the radioactive material monitoring subsystem to operate according to a second pulse control signal, so that the radiation imaging subsystem and the radioactive material monitoring subsystem operate alternately by a synchronization control subsystem.

10. The method according to claim 9, wherein the operating a radioactive material monitoring subsystem in the pulse mode to monitor whether the luggage or package object contains a radioactive material comprises:
operating a radioactivity monitoring detector in a pulse mode to monitor a radioactive ray emitted by the luggage or package object.

11. The method according to claim 10, wherein at least one of a gamma ray and a neutron ray emitted by the luggage or package object is monitored by the radioactivity monitoring detector.

12. The method according to any one of claims 9-11, wherein the radiation imaging subsystem and the radioactive material monitoring subsystem are controlled in real time to operate alternately by the synchronization control subsystem through a variable and adjustable pulse control signal.

13. The method according to any one of claims 9-11, wherein
the radiation imaging subsystem is controlled to operate according to the first pulse control signal to perform the radiation imaging on the luggage or package object,
the radioactive material monitoring subsystem is controlled to operate according the second pulse control signal to monitor whether the luggage or package object contains a radioactive material, and
the first pulse control signal and the second pulse control signal comprise rectangular waves.

14. The method according to claim 13, wherein
the first pulse control signal comprises a plurality of first pulses,
the second pulse control signal comprises second pulses, the radioactive material monitoring subsystem operating during the second pulses to monitor a radioactive ray emitted by the luggage or package object, and
each of some or all of the second pulses is between two adjacent first pulses in time, and a spacing between adjacent first pulses is greater than or equal to a pulse width of the second pulses.

15. The method according to any one of claims 9-11 and 14, further comprising:
transporting the luggage or package object to pass through a detection region, and outputting a transmission signal indicating times when the luggage or package object enters and leaves the detection region and a transporting speed of the luggage or package object to at least the synchronization control subsystem by a transmission subsystem, and
controlling operations of the radiation imaging subsystem and the radioactive material monitoring subsystem by the synchronization control subsystem based on the transmission signal,
the method further comprising:
converging a radioactivity information of the luggage or package object obtained by the radioactive material monitoring subsystem into the image of the luggage or package object obtained by the radiation imaging subsystem.

## Patentansprüche

1. Konvergiertes System zum Durchführen einer Strahlungsbildgebung und einer Überwachung von radioaktivem Material an einem Gepäck- oder Paketobjekt (105, 205, 305), umfassend:
ein Strahlungsbildgebungssubsystem (10), das eingerichtet ist, in einem Impulsmodus zu arbeiten, um eine Strahlungsbildgebung an dem Gepäck- oder Paketobjekt durchzuführen;
ein Subsystem (20) zur Überwachung von radioaktivem Material, das eingerichtet ist, in einem Impulsmodus zu arbeiten, um zu überwachen, ob das Gepäck- oder Paketobjekt ein radioaktives Material enthält; und
ein Synchronisationssteuerungssubsystem (30), das sowohl mit dem Strahlungsbildgebungssubsystem als auch mit dem Subsystem zur Überwachung von radioaktivem Material in Kommunikation steht,
wobei das Strahlungsbildgebungssubsystem umfasst:
eine Strahlungsquelle (11), die eingerichtet ist, einen Strahlungsstrahl in einem Impulsmodus zum Bestrahlen des Gepäck- oder Paketobjekts zu erzeugen; und
einen Strahlungsbildgebungsdetektor (12), der eingerichtet ist, einen Strahl zu detektieren, der durch das Gepäck- oder Paketobjekt unter einer Bestrahlung mit dem Strahlungsstrahl gestreut, reflektiert oder durchgelassen wird, um Daten zum Bilden eines Bildes des Gepäck- oder Paketobjekts zu erzeugen,
wobei die Strahlungsquelle eine Niedrigenergie-Röntgenquelle ist, die zu einer steuerbaren Impulsemission fähig ist, und die Niedrigenergie-Röntgenquelle eingerichtet ist, eine Strahlungsbildgebung mit einer Röntgenenergie in einer Größenordnung von Kiloelektronenvolt an dem Gepäck- oder Paketobjekt durchzuführen,
**dadurch gekennzeichnet, dass** das Synchronisationssteuerungssubsystem eingerichtet ist, das Strahlungsbildgebungssubsystem (10) gemäß einem ersten Impulssteuersignal (S2) zu steuern und das Subsystem (20) zur Überwachung von radioaktivem Material gemäß einem zweiten Impulssteuersignal (S3) zu steuern, sodass das Strahlungsbildgebungssubsystem und das Subsystem zur Überwachung von radioaktivem Material abwechselnd arbeiten.

2. Konvergiertes System nach Anspruch 1, wobei das Subsystem zur Überwachung von radioaktivem Material einen Radioaktivitätsüberwachungsdetektor (21) umfasst, der eingerichtet ist, in einem Impulsmodus zu arbeiten, um einen radioaktiven Strahl zu überwachen, der durch das Gepäck- oder Paketobjekt emittiert wird.

3. Konvergiertes System nach Anspruch 2, wobei der Radioaktivitätsüberwachungsdetektor mindestens eines von einem Gammastrahldetektor und einem Neutronendetektor umfasst.

4. Konvergiertes System nach einem der Ansprüche 1 und 3, wobei das Synchronisationssteuerungssubsystem eingerichtet ist, das Strahlungsbildgebungssubsystem und das Subsystem zur Überwachung von radioaktivem Material zu steuern, um in Echtzeit durch ein variables und einstellbares Impulssteuersignal abwechselnd zu arbeiten.

5. Konvergiertes System nach einem der Ansprüche 1 und 3, wobei
das Strahlungsbildgebungssubsystem eingerichtet ist, gemäß dem ersten Impulssteuersignal (S2) zu arbeiten, um die Strahlungsbildgebung an dem Gepäck- oder Paketobjekt durchzuführen,
das Subsystem zur Überwachung von radioaktivem Material eingerichtet ist, gemäß dem zweiten Impulssteuersignal (S3) zu arbeiten, um zu überwachen, ob das Gepäck- oder Paketobjekt ein radioaktives Material enthält, und
das erste Impulssteuersignal und das zweite Impulssteuersignal Rechteckwellen umfassen.

6. Konvergiertes System nach Anspruch 5, wobei
das erste Impulssteuersignal eine Vielzahl von ersten Impulsen (S21) umfasst,
das zweite Impulssteuersignal zweite Impulse (S31) umfasst, wobei das Subsystem zur Überwachung von radioaktivem Material eingerichtet ist, während der zweiten Impulse zu arbeiten, um einen radioaktiven Strahl zu überwachen, der durch das Gepäck- oder Paketobjekt emittiert wird, und
jeder von einigen oder allen der zweiten Impulse zeitlich zwischen zwei benachbarten ersten Impulsen liegt und ein Abstand zwischen benachbarten ersten Impulsen größer als oder gleich einer Impulsbreite der zweiten Impulse ist.

7. Konvergiertes System nach einem der Ansprüche 1, 3 und 6, ferner umfassend:
ein Transportsubsystem, das eingerichtet ist, das Gepäck- oder Paketobjekt zu transportieren, um durch eine Detektionsregion hindurchzutreten, und ein Transportsignal, das Zeiten angibt, zu denen das Gepäck- oder Paketobjekt in die Detektionsregion eintritt und diese verlässt, und eine Transportgeschwindigkeit des Gepäck- oder Paketobjekts zumindest an das Synchronisationssteuerungssubsystem auszugeben,
wobei das Synchronisationssteuerungssubsystem ferner eingerichtet ist, Operationen des Strahlungsbildgebungssubsystems und des Subsystems zur Überwachung von radioaktivem Material basierend auf dem Transportsignal zu steuern.

8. Konvergiertes System nach einem der Ansprüche 1, 3 und 6, ferner umfassend:
ein Informationskonvergenzsubsystem (40), das eingerichtet ist, mit dem Subsystem zur Überwachung von radioaktivem Material und dem Strahlungsbildgebungssubsystem in Kommunikation zu stehen, um eine Radioaktivitätsinformation des Gepäck- oder Paketobjekts, die durch das Subsystem zur Überwachung von radioaktivem Material erhalten wird, in das Bild des Gepäck- oder Paketobjekts, das durch das Strahlungsbildgebungssubsystem erhalten wird, zusammenzuführen.

9. Verfahren zum Durchführen einer Strahlungsbildgebung und einer Überwachung von radioaktivem Material an einem Gepäck- oder Paketobjekt, umfassend:
Betreiben eines Strahlungsbildgebungssubsystems in einem Impulsmodus, um eine Strahlungsbildgebung an dem Gepäck- oder Paketobjekt durchzuführen;
Betreiben eines Subsystems zur Überwachung von radioaktivem Material in einem Impulsmodus, um zu überwachen, ob das Gepäck- oder Paketobjekt ein radioaktives Material enthält;
wobei das Betreiben eines Strahlungsbildgebungssubsystems in einem Impulsmodus, um eine Strahlungsbildgebung an dem Gepäck- oder Paketobjekt durchzuführen, umfasst:
Erzeugen eines Strahlungsstrahls in einem Impulsmodus, um das Gepäck- oder Paketobjekt durch eine Niedrigenergie-Röntgenquelle zu bestrahlen, die zu einer steuerbaren Impulsemission fähig ist und eine Röntgenenergie in einer Größenordnung von Kiloelektronenvolt aufweist; und
Detektieren eines Strahls, der durch das Gepäck- oder Paketobjekt unter einer Bestrahlung mit dem Strahlungsstrahl gestreut, reflektiert oder durchgelassen wird, um durch einen Strahlungsbildgebungsdetektor Daten zum Bilden eines Bildes des Gepäck- oder Paketobjekts zu erzeugen,
**dadurch gekennzeichnet, dass** das Verfahren ferner das Steuern des Strahlungsbildgebungssubsystems, um gemäß einem ersten Impulssteuersignal zu arbeiten, und das Steuern des Subsystems zur Überwachung von radioaktivem Material, um gemäß einem zweiten Impulssteuersignal zu arbeiten, umfasst, sodass das Strahlungsbildgebungssubsystem und das Subsystem zur Überwachung von radioaktivem Material durch ein Synchronisationssteuerungssubsystem abwechselnd arbeiten.

10. Verfahren nach Anspruch 9, wobei das Betreiben eines Subsystems zur Überwachung von radioaktivem Material in dem Impulsmodus, um zu überwachen, ob das Gepäck- oder Paketobjekt ein radioaktives Material enthält, umfasst:
Betreiben eines Radioaktivitätsüberwachungsdetektors in einem Impulsmodus, um einen radioaktiven Strahl zu überwachen, der durch das Gepäck- oder Paketobjekt emittiert wird.

11. Verfahren nach Anspruch 10, wobei mindestens eines von einem Gammastrahl und einem Neutronenstrahl, der durch das Gepäck- oder Paketobjekt emittiert wird, durch den Radioaktivitätsüberwachungsdetektor überwacht wird.

12. Verfahren nach einem der Ansprüche 9-11, wobei das Strahlungsbildgebungssubsystem und das Subsystem zur Überwachung von radioaktivem Material in Echtzeit durch das Synchronisationssteuerungssubsystem durch ein variables und einstellbares Impulssteuersignal gesteuert werden, um abwechselnd zu arbeiten.

13. Verfahren nach einem der Ansprüche 9-11, wobei
das Strahlungsbildgebungssubsystem gesteuert wird, um gemäß dem ersten Impulssteuersignal zu arbeiten, um die Strahlungsbildgebung an dem Gepäck- oder Paketobjekt durchzuführen,
das Subsystem zur Überwachung von radioaktivem Material gesteuert wird, um gemäß dem zweiten Impulssteuersignal zu arbeiten, um zu überwachen, ob das Gepäck- oder Paketobjekt ein radioaktives Material enthält, und
das erste Impulssteuersignal und das zweite Impulssteuersignal Rechteckwellen umfassen.

14. Verfahren nach Anspruch 13, wobei
das erste Impulssteuersignal eine Vielzahl von ersten Impulsen umfasst,
das zweite Impulssteuersignal zweite Impulse umfasst, wobei das Subsystem zur Überwachung von radioaktivem Material während der zweiten Impulse arbeitet, um einen radioaktiven Strahl zu überwachen, der durch das Gepäck- oder Paketobjekt emittiert wird, und
jeder von einigen oder allen der zweiten Impulse zeitlich zwischen zwei benachbarten ersten Impulsen liegt und ein Abstand zwischen benachbarten ersten Impulsen größer als oder gleich einer Impulsbreite der zweiten Impulse ist.

15. Verfahren nach einem der Ansprüche 9-11 und 14, ferner umfassend:
Transportieren des Gepäck- oder Paketobjekts, um durch eine Detektionsregion hindurchzutreten, und Ausgeben eines Transportsignals, das Zeiten angibt, zu denen das Gepäck- oder Paketobjekt in die Detektionsregion eintritt und diese verlässt, und einer Transportgeschwindigkeit des Gepäck- oder Paketobjekts zumindest an das Synchronisationssteuerungssubsystem durch ein Transportsubsystem, und
Steuern von Operationen des Strahlungsbildgebungssubsystems und des Subsystems zur Überwachung von radioaktivem Material durch das Synchronisationssteuerungssubsystem basierend auf dem Transportsignal,
wobei das Verfahren ferner umfasst:
Zusammenführen einer Radioaktivitätsinformation des Gepäck- oder Paketobjekts, die durch das Subsystem zur Überwachung von radioaktivem Material erhalten wird, in das Bild des Gepäck- oder Paketobjekts, das durch das Strahlungsbildgebungssubsystem erhalten wird.

## Revendications

1. Un système convergent pour réaliser une imagerie par rayonnement et une surveillance de matière radioactive sur un objet de bagage ou de colis (105, 205, 305), comprenant :
un sous-système d'imagerie par rayonnement (10) configuré pour fonctionner dans un mode pulsé pour réaliser une imagerie par rayonnement sur l'objet de bagage ou de colis ;
un sous-système de surveillance de matière radioactive (20) configuré pour fonctionner dans un mode pulsé pour surveiller si l'objet de bagage ou de colis contient une matière radioactive ; et
un sous-système de commande de synchronisation (30) étant en communication avec à la fois le sous-système d'imagerie par rayonnement et le sous-système de surveillance de matière radioactive,
dans lequel le sous-système d'imagerie par rayonnement comprend :
une source de rayonnement (11) configurée pour générer un faisceau de rayonnement dans un mode pulsé pour irradier l'objet de bagage ou de colis ; et
un détecteur d'imagerie par rayonnement (12) configuré pour détecter un rayon diffusé, réfléchi ou transmis par l'objet de bagage ou de colis sous une irradiation du faisceau de rayonnement, de manière à générer des données pour former une image de l'objet de bagage ou de colis,
dans lequel la source de rayonnement est une source de rayons X à faible énergie capable d'une émission pulsée commandable, et la source de rayons X à faible énergie est configurée pour réaliser une imagerie par rayonnement avec une énergie de rayons X dans un ordre de grandeur de kiloélectronvolts sur l'objet de bagage ou de colis,
**caractérisé en ce que** le sous-système de commande de synchronisation est configuré pour commander le sous-système d'imagerie par rayonnement (10) pour fonctionner selon un premier signal de commande d'impulsion (S2) et commander le sous-système de surveillance de matière radioactive (20) pour fonctionner selon un second signal de commande d'impulsion (S3) de sorte que le sous-système d'imagerie par rayonnement et le sous-système de surveillance de matière radioactive fonctionnent alternativement.

2. Le système convergent selon la revendication 1, dans lequel le sous-système de surveillance de matière radioactive comprend un détecteur de surveillance de radioactivité (21) configuré pour fonctionner dans un mode pulsé pour surveiller un rayon radioactif émis par l'objet de bagage ou de colis.

3. Le système convergent selon la revendication 2, dans lequel le détecteur de surveillance de radioactivité comprend au moins l'un d'un détecteur de rayons gamma et d'un détecteur de neutrons.

4. Le système convergent selon l'une quelconque des revendications 1 et 3, dans lequel le sous-système de commande de synchronisation est configuré pour commander le sous-système d'imagerie par rayonnement et le sous-système de surveillance de matière radioactive pour fonctionner alternativement en temps réel par l'intermédiaire d'un signal de commande d'impulsion variable et ajustable.

5. Le système convergent selon l'une quelconque des revendications 1 et 3, dans lequel,
le sous-système d'imagerie par rayonnement est configuré pour fonctionner selon le premier signal de commande d'impulsion (S2) pour réaliser l'imagerie par rayonnement sur l'objet de bagage ou de colis,
le sous-système de surveillance de matière radioactive est configuré pour fonctionner selon le second signal de commande d'impulsion (S3) pour surveiller si l'objet de bagage ou de colis contient une matière radioactive, et
le premier signal de commande d'impulsion et le second signal de commande d'impulsion comprennent des ondes rectangulaires.

6. Le système convergent selon la revendication 5, dans lequel,
le premier signal de commande d'impulsion comprend une pluralité de premières impulsions (S21),
le second signal de commande d'impulsion comprend des secondes impulsions (S31), le sous-système de surveillance de matière radioactive étant configuré pour fonctionner pendant les secondes impulsions pour surveiller un rayon radioactif émis par l'objet de bagage ou de colis, et
chacune de certaines ou de toutes les secondes impulsions se situe entre deux premières impulsions adjacentes dans le temps, et un espacement entre des premières impulsions adjacentes est supérieur ou égal à une largeur d'impulsion des secondes impulsions.

7. Le système convergent selon l'une quelconque des revendications 1, 3 et 6, comprenant en outre :
un sous-système de transmission configuré pour transporter l'objet de bagage ou de colis pour traverser une région de détection, et délivrer un signal de transmission indiquant des moments auxquels l'objet de bagage ou de colis entre dans la région de détection et quitte la région de détection et une vitesse de transport de l'objet de bagage ou de colis à au moins le sous-système de commande de synchronisation,
dans lequel le sous-système de commande de synchronisation est en outre configuré pour commander des fonctionnements du sous-système d'imagerie par rayonnement et du sous-système de surveillance de matière radioactive sur la base du signal de transmission.

8. Le système convergent selon l'une quelconque des revendications 1, 3 et 6, comprenant en outre :
un sous-système de convergence d'informations (40) configuré pour être en communication avec le sous-système de surveillance de matière radioactive et le sous-système d'imagerie par rayonnement, de manière à faire converger une information de radioactivité de l'objet de bagage ou de colis obtenue par le sous-système de surveillance de matière radioactive dans l'image de l'objet de bagage ou de colis obtenue par le sous-système d'imagerie par rayonnement.

9. Un procédé pour réaliser une imagerie par rayonnement et une surveillance de matière radioactive sur un objet de bagage ou de colis, comprenant :
le fonctionnement d'un sous-système d'imagerie par rayonnement dans un mode pulsé pour réaliser une imagerie par rayonnement sur l'objet de bagage ou de colis ;
le fonctionnement d'un sous-système de surveillance de matière radioactive dans un mode pulsé pour surveiller si l'objet de bagage ou de colis contient une matière radioactive ;
dans lequel le fonctionnement d'un sous-système d'imagerie par rayonnement dans un mode pulsé pour réaliser une imagerie par rayonnement sur l'objet de bagage ou de colis comprend :
la génération d'un faisceau de rayonnement dans un mode pulsé pour irradier l'objet de bagage ou de colis par une source de rayons X à faible énergie étant capable d'une émission pulsée commandable et ayant une énergie de rayons X dans un ordre de grandeur de kiloélectronvolts ; et
la détection d'un rayon diffusé, réfléchi ou transmis par l'objet de bagage ou de colis sous une irradiation du faisceau de rayonnement pour générer des données pour former une image de l'objet de bagage ou de colis par un détecteur d'imagerie par rayonnement,
**caractérisé en ce que** le procédé comprend en outre la commande du sous-système d'imagerie par rayonnement pour fonctionner selon un premier signal de commande d'impulsion et la commande du sous-système de surveillance de matière radioactive pour fonctionner selon un second signal de commande d'impulsion, de sorte que le sous-système d'imagerie par rayonnement et le sous-système de surveillance de matière radioactive fonctionnent alternativement par un sous-système de commande de synchronisation.

10. Le procédé selon la revendication 9, dans lequel le fonctionnement d'un sous-système de surveillance de matière radioactive dans le mode pulsé pour surveiller si l'objet de bagage ou de colis contient une matière radioactive comprend :
le fonctionnement d'un détecteur de surveillance de radioactivité dans un mode pulsé pour surveiller un rayon radioactif émis par l'objet de bagage ou de colis.

11. Le procédé selon la revendication 10, dans lequel au moins l'un d'un rayon gamma et d'un rayon neutronique émis par l'objet de bagage ou de colis est surveillé par le détecteur de surveillance de radioactivité.

12. Le procédé selon l'une quelconque des revendications 9 à 11, dans lequel le sous-système d'imagerie par rayonnement et le sous-système de surveillance de matière radioactive sont commandés en temps réel pour fonctionner alternativement par le sous-système de commande de synchronisation par l'intermédiaire d'un signal de commande d'impulsion variable et ajustable.

13. Le procédé selon l'une quelconque des revendications 9 à 11, dans lequel
le sous-système d'imagerie par rayonnement est commandé pour fonctionner selon le premier signal de commande d'impulsion pour réaliser l'imagerie par rayonnement sur l'objet de bagage ou de colis,
le sous-système de surveillance de matière radioactive est commandé pour fonctionner selon le second signal de commande d'impulsion pour surveiller si l'objet de bagage ou de colis contient une matière radioactive, et
le premier signal de commande d'impulsion et le second signal de commande d'impulsion comprennent des ondes rectangulaires.

14. Le procédé selon la revendication 13, dans lequel
le premier signal de commande d'impulsion comprend une pluralité de premières impulsions,
le second signal de commande d'impulsion comprend des secondes impulsions, le sous-système de surveillance de matière radioactive fonctionnant pendant les secondes impulsions pour surveiller un rayon radioactif émis par l'objet de bagage ou de colis, et
chacune de certaines ou de toutes les secondes impulsions se situe entre deux premières impulsions adjacentes dans le temps, et un espacement entre des premières impulsions adjacentes est supérieur ou égal à une largeur d'impulsion des secondes impulsions.

15. Le procédé selon l'une quelconque des revendications 9 à 11 et 14, comprenant en outre
le transport de l'objet de bagage ou de colis pour traverser une région de détection, et la délivrance d'un signal de transmission indiquant des moments auxquels l'objet de bagage ou de colis entre dans la région de détection et quitte la région de détection et une vitesse de transport de l'objet de bagage ou de colis à au moins le sous-système de commande de synchronisation par un sous-système de transmission, et
la commande de fonctionnements du sous-système d'imagerie par rayonnement et du sous-système de surveillance de matière radioactive par le sous-système de commande de synchronisation sur la base du signal de transmission,
le procédé comprenant en outre :
la convergence d'une information de radioactivité de l'objet de bagage ou de colis obtenue par le sous-système de surveillance de matière radioactive dans l'image de l'objet de bagage ou de colis obtenue par le sous-système d'imagerie par rayonnement.
